# EUROPÄISCHE PATENTSCHRIFT

(11) **EP 2 647 878 B1**
(45) Veröffentlichungstag und Bekanntmachung des Hinweises auf die Patenterteilung: **06.05.2015**
(21) Anmeldenummer: 13161067.7
(22) Anmeldetag: 26.03.2013
(51) Int. Cl.: F16H 19/04, E05B 53/00, E05B 1/00

(54) **Vorrichtung zur Erzeugung einer unidirektionalen Drehbewegung sowie Schwenkgriffanordnung mit einer solchen Vorrichtung**
Device for generating a unidirectional rotational movement and pivoting grip assembly with such a device
Dispositif pour générer un mouvement rotatif unidirectionnel et poignée pivotante avec un tel dispositif

(30) Priorität: 03.04.2012 DE 202012003361 U
(43) Veröffentlichungstag der Anmeldung: 09.10.2013
(73) Patentinhaber: Burg F. W. Lüling KG, 58300 Wetter (DE)
(72) Erfinder: Müller, Ralf, 58135 Hagen (DE)
(74) Vertreter: Buse, Mentzel, Ludewig Patentanwaltskanzlei

(56) Entgegenhaltungen:
- EP-A1- 0 592 385
- GB-A- 261 974
- US-A- 4 333 324
- US-A- 4 809 526
- US-A- 5 496 082

## Beschreibung

Die Erfindung betrifft eine Vorrichtung zur Erzeugung einer unidirelctionalen Drehbewegung, wobei das Antriebzahnrad aus seiner Ausgangsstellung sowohl mittels einer Drehbewegung im Uhrzeigersinn als auch durch eine Drehung entgegen dem Uhrzeigersinn bewegt werden kann. Des Weiteren betrifft die Erfindung eine Schwenkgriffanordnung, die mit einer solchen Vorrichtung ausgestattet ist.

Aus dem Gebrauchsmuster DE 202 15 295 U1 ist eine Schwenkgriffanordnung zum Verschluss einer Tür eines Schaltschranks bekannt. Dieser Schwenkgriff umfasst eine Handhabe, die in einer Griffschale, welche an der Tür des Schaltschranks befestigt ist, bündig aufgenommen ist. Beim Ausschwenken der Handhabe wird durch Übertragung der Schwenkbewegung auf ein Verschlusselement die Verriegelung der Tür aufgehoben und ein Öffnen der Tür ermöglicht. Die Tür eines Schaltschranks wird je nach Wunsch des Nutzers rechts oder links angeschlagen, d.h. die Schwenkgriffanordnung ist am linken Rand der Tür bzw. am rechten Rand der Tür des Schaltschranks vorgesehen. Für unterschiedlich anzuschlagende Türen sind unterschiedliche Ausgestaltungen der Schwenkgriffanordnung zu verwenden. So ist in der Regel gewünscht, dass die Verriegelungsanordnung im Unterteil der vorgesehen ist und die Handhabe ihre Schwenkachse im Bereich des Oberteils der Schwenkgriffanordnung besitzt. Durch ein verdrehtes Einbauen der Tür wird eine solche Anordnung nicht erzielt, da beim Verdrehen die Verriegelung zum Oberteil der Schwenkgriffanordnung wird und die Schwenkachse der Handhabe sich unten befindet. Des Weiteren ist gewünscht, dass die Schwenkbewegung der Handhabe immer in Richtung Türblatt erfolgt, weil gegebenenfalls neben dem Schrank kein Platz für die Ausschwenkbewegung der Handhabe ist oder eine solche, ausgeschwenkte Handhabe ein Verletzungsrisiko darstellen kann. Es sind damit mehrere Änderungen an der bekannten Schwenkgriffanordnung vorzunehmen, wenn der Anschlag der Tür am Schaltschrank geändert wird.

Weiterhin ist aus dem Patentschrift US 5,496,082 eine Türschlossanordnung mit einer Vorrichtung zur Erzeugung einer unidirektionalen Drehbewegung bekannt, welche ein Gehäuse aufweist in welchem ein Abtriebszahnrad mit feststehender Drehachse gelagert ist und ein einen Zahnschiene aufweisenden Übertragungselement bewegbar aufgenommen ist.

Aufgabe der vorliegenden Erfindung ist es, eine Schwenkgriffanordnung zur Verfügung zu stellen, die für Türen mit unterschiedlichem Anschlag unverändert eingesetzt werden kann, wobei insbesondere die Schwenkbewegung der Handhabe immer in Richtung des Türblatts erfolgen soll.

Diese Aufgabe wird mit einer Schwenkgriffanordnung gemäß dem Anspruch 11 erfüllt. Hierzu wird eine Vorrichtung zur Erzeugung einer unidirektionalen Drehbewegung gemäß Anspruch 1 eingesetzt.

Diese Vorrichtung zur Erzeugung einer unidirektionalen Drehbewegung, d.h. einer immer in die gleiche Richtung erfolgenden Drehbewegung bei einem Abtriebzahnrad, wird bei dieser erfindungsgemäßen Vorrichtung durch ein Antriebzahnrad erzeugt und mittels eines Übertragungselements auf das Abtriebzahnrad übertragen. Das Antriebzahnrad ist in unterschiedliche Drehrichtungen bewegbar und zusammen mit dem Abtriebzahnrad sowie dem bewegbaren Übertragungselement in einem Gehäuse aufgenommen. Sowohl das Antriebzahnrad als auch das Abtriebzahnrad sind dabei im Gehäuse mit feststehender Drehachse gelagert. Wird eine solche Vorrichtung zur Erzeugung einer unidirektionalen Drehbewegung für eine Schwenkgriffanordnung verwendet, so wird das Gehäuse dieser Vorrichtung im Gehäuse der Schwenkgriffanordnung untergebracht oder aber es stellt vorteilhafterweise das Gehäuse der Schwenkgriffanordnung dar, das beispielsweise an der Tür eines Schaltschranks befestigt wird.

Das Antriebzahnrad kann aus einer Ausgangstellung sowohl mittels einer Drehbewegung im Uhrzeigersinn, einer Rechtsdrehung, als auch durch eine Drehbewegung entgegen dem Uhrzeigersinn, einer Linksdrehung, um einen gewissen Drehwinkel bewegt werden. Mittels des Übertragungselements führt eine solche Rechtsdrehung bzw. Linksdrehung des Antriebzahnrads zu einer unidirektionalen Drehung des Abtriebzahnrads, d.h. entweder ausschließlich zu einer Linksdrehung oder ausschließlich zu einer Rechtsdrehung des Abtriebzahnrads.

Wird diese Vorrichtung für eine Schwenkgriffanordnung verwendet, so ist das Antriebzahnrad drehmomentübertragend mit der Handhabe verbunden, die im Uhrzeigersinn und/oder entgegen dem Uhrzeigersinn verschwenkt werden kann. Durch eine solche Bewegung wird eine unidirektionale Bewegung bei einem Drehteil erzeugt, welches drehmomentübertragend mit dem Abtriebzahnrad verbunden ist und auf ein Verschlussteil einwirkt. Damit kann eine solche Schwenkgriffanordnung für unterschiedlich angeschlagene Türen verwendet werden, da beim Verschenken der Handhabe in unterschiedliche Richtungen, das mit dem Verschlussteil verbundene Drehteil immer in die gleiche Richtung bewegt wird und damit immer in der gleichen Weise auf das Verschlussteil einwirkt.

Nachfolgend soll das Prinzip erläutert werden, nämlich wie bei einem Abtriebzahnrad mittels des neuen Übertragungselements eine unidirektionale Bewegung erzeugt wird, welche durch unterschiedliche Drehbewegungen eines Antriebzahnrads ausgelöst wird. Das neue Prinzip kann auch auf andere Vorrichtungen angewendet werden. Es ist nicht auf die Verwendung bei Schwenkgriffanordnungen beschränkt.

Das die Bewegung auslösende Antriebzahnrad ist an seinem Umfang mit einem Zahnabschnitt und einem Führungsabschnitt ausgestattet. Der Zahnabschnitt nimmt dabei vorzugsweise mindestens die Hälfte des Umfangs des Antriebzahnrades ein. Die verbleibende Hälfte des Umfangs des Antriebzahnrades stellt der Führungsabschnitt dar, der sich dann gegenüberliegend zum Zahnabschnitt befindet. Das Antriebzahnrad befindet sich in der Ausgangsstellung immer mit mindestens einem Zahn des Zahnabschnitts in teilweisem Eingriff an mindestens einer Zahnreihe des Übertragungselementes und gelangt bei einer Bewegung aus der Ausgangsstellung mit seinem Zahnabschnitt in Zahneingriff mit einer von zwei geraden Zahnschienen des Übertragungselementes, nämlich bei einer Rechtsdrehung, d.h. einer Drehbewegung im Uhrzeigersinn, greifen die Zähne des Zahnabschnittes in die eine, rechts vom Antriebzahnrad angeordnete Zahnschiene, wohingegen bei einer Linksdrehung, d.h. einer Drehbewegung entgegen dem Uhrzeigersinn, die Zähne des Zahnabschnitts in eine Zahnreihe einer weiteren Zahnschiene eingreifen, die links vom Antriebzahnrad angeordnet ist. Bei diesem Eingriff stützt sich das Antriebzahnrad mit seinem Führungsabschnitt gegenüberliegend zum Eingriff am Übertragungselement ab. Dazu ist im entsprechenden Abstand am Übertragungselement eine Führungsbahn vorgesehen oder aber das Antriebzahnrad rollt mit seinem Führungsabschnitt an den Zahnköpfen der Zahnreihe der Zahnschiene ab, die sich gegenüberliegend zu der Zahnschiene befindet, in die der Zahnabschnitt des Antriebzahnrads eingreift. Hierfür sind die beiden gegenüberliegenden Zahnschienen parallel zueinander angeordnet. Die Zahnreihen dieser Zahnschienen sind einander zugewandt. Beide Zahnschienen haben einen geraden Verlauf. Der Abstand der Zahnschienen ist so gewählt, dass in der Ausgangsstellung des Antriebzahnrads dieses immer mit mindestens einem Zahn zumindest teilweise in Zahnlücken der Zahnschienen eingreifen kann. Die beiden Zahnschienen sind zusammen mit einer dritten Zahnschiene Teile des Übertragungselements, vorzugsweise Teile, die einstückig mit dem Übertragungselement ausgebildet sind. Die dritte Zahnschiene ist im Abstand zu den beiden Zahnschienen vorgesehen, auf die das Antriebzahnrad einwirken kann. Diese dritte Zahnschiene ist ebenfalls eine gerade Zahnschiene mit einer Zahnreihe, die im Zahneingriff mit dem Abtriebzahnrad steht, so dass eine Bewegung des Antriebzahnrades auf das Abtriebzahnrad übertragen werden kann. Vorzugsweise verlaufen alle drei Zahnschienen parallel zueinander. Das Übertragungselement ist bei jeder Stellung des Antriebzahnrads immer innerhalb des Gehäuses zwangsgeführt, dies aufgrund des teilweisen oder vollständigen Eingriffs mindestens eines Zahns des Zahnabschnitts des Antriebszahnrads in zumindest eine der beiden Zahnschienen. In der Ausgangsstellung pendelt das Übertragungselement um die Drehachse des Abtriebzahnrads. Das Ausmaß dieser Pendelbewegung ist durch die mögliche Bewegung des Übertragungselements zwischen dem teilweisen Eingriff in der Ausgangsstellung und dem vollständigen Zahneingriff des Antriebzahnrads in eine der Zahnschienen des Übertragungselements, also durch den Abstand der Zahnschienen, bestimmt.

Das Abtriebzahnrad besitzt ebenfalls einen Zahnabschnitt, vorzugweise wird dieser Zahnabschnitt umfangsseitig vorgesehen. Des Weiteren besitzt das Abtriebzahnrad einen Führungsabschnitt, um sich am Übertragungselement abzustützen. Dieser Führungsabschnitt des Abtriebzahnrads ist beispielsweise unterhalb und/ oder oberhalb des Zahnabschnitts vorgesehen, vorzugsweise besitzt das Abtriebzahnrad unterhalb und/ oder oberhalb des Zahnabschnitts eine Verlängerung des Zahnfußkreises.

Für die gewünschte Übertragung der Bewegung des Antriebzahnrades auf das Abtriebzahnrad mittels des Übertragungselements sind die drei Zahnschienen, nämlich die beiden Zahnschienen für den möglichen Eingriff des Antriebzahnrads und die eine Zahnschiene für das Abtriebzahnrad, in entsprechender Anordnung am Übertragungselement vorgesehen. Dieses Übertragungselement ist ringartig ausgestaltet, wobei der Ring, der das Übertragungselement bildet, zwei gegenüberliegende Langseiten mit gerade verlaufenden Abschnitten besitzt und sich die drei Zahnschienen an den Innenseiten des Rings im Bereich dieser geraden Abschnitte der Langseiten befinden. Die Zahnreihen der Zahnschienen weisen dabei in das Innere des Rings, wobei zwei Zahnschienen gegenüberliegend angeordnet sind, nämlich die beiden Zahnschienen für den Eingriff des Antriebzahnrads, d.h. diese beiden Zahnschienen sind an unterschiedlichen Langseiten des Rings vorgesehen. Die dritte Zahnschiene für den Eingriff des Abtriebzahnrads befindet sich im Abstand zu einer dieser beiden Zahnschienen an einer Längsseite. Das Übertragungselement ist vorzugsweise ein einstückiges, ringförmiges Element und die beiden Langseiten sind jeweils über gebogene Schmalseiten miteinander verbunden. Bei einer bevorzugten Ausführungsform des Übertragungselements sind die Schmalseiten in einem solchen Abstand von den jeweiligen Zahnschienen vorgehen, dass sie gleichzeitig als Begrenzung für die mögliche Drehbewegung des Antriebzahnrads und/oder des Abtriebzahnrads dienen können. Diese vorteilhafte Form des Übertragungselementes stellt eine besonders kompakte Ausführung dar. Das vorbeschriebene Prinzip ist auch mit anderen Ausgestaltungen des Übertragungselements, beispielsweise bei Vorsehen der dritten Zahnschiene an einer Außenseite des Übertragungselementes, durchführbar. In diesem Fall pendelt das Übertragungselement auch um eine feststehende Drehachse, beispielsweise eines Rades mit einem Führungsabschnitt, jedoch nicht um die Drehachse des Abtriebzahnrads. Die beiden Funktionen des Abtriebzahnrads, nämlich Zahneingriff durch den Zahnabschnitt und Führung durch den Führungsabschnitt werden dann quasi auf zwei Räder verteilt.

Für ein leichtes Abwälzen der Zähne des Zahnabschnitts des Antriebzahnrades in den Zahnreihen der Zahnschienen bei einer Rechts- bzw. Linksdrehung des Antriebzahnrads wird für die Verzahnung eine bekannte Evolventenverzahnung gewählt. In gleicher Weise kann diese Verzahnung für das Abtriebzahnrad gewählt werden.

Das Besondere an der vorliegenden Erfindung ist, dass das Antriebzahnrad in der Ausgangsstellung zumindest mit einem Zahn seines Zahnabschnitts in einem teilweisen Eingriff mit mindestens einer Zahnschiene des Übertragungselementes ist und aus der Ausgangsstellung entweder mit der ersten Zahnschiene des Übertragungselementes oder aber mit der gegenüberliegenden zweiten Zahnschiene des Übertragungselementes in Eingriff gebracht werden kann und durch seine Drehbewegung das Übertragungselement entweder nach links oder nach rechts verstellt, wobei nachfolgend das Übertragungselement jeweils in die gleiche Richtung verschoben wird, egal in welche Zahnschiene der Zahnabschnitt des Antriebzahnrads vollständig eingreift. Auf diese Weise verschiebt sich auch die dritte Zahnschiene jeweils in die gleiche Richtung, egal ob die Ausgangsbewegung des Antriebzahnrads eine Drehbewegung nach rechts oder eine Drehbewegung nach links war und diese immer gleich ausgerichtete Schubbewegung des Übertragungselements wird über die dritte Zahnschiene in eine immer gleich ausgerichtete, d.h. unidirektionale, Drehbewegung des Abtriebzahnrads umgewandelt, so dass mittels dieser Vorrichtung eine unidirektionale Drehbewegung erzeugt werden kann.

Bei einer vorteilhaften Ausführungsform wird eine besondere Anordnung der beiden Zahnschienen für den Eingriff des Antriebzahnrads gewählt, nämlich in der Weise, dass in der Ausgangsstellung des Antriebzahnrads die Zahnspitze sowohl des ersten Zahns des Zahnabschnitts in die erste Zahnlücke der ersten Zahnschiene und ebenso die Zahnspitze des letzten Zahns des Zahnabschnittes in die erste Zahnlücke der gegenüberliegenden zweiten Zahnschiene teilweise eingreift. Um zu Beginn einer Drehbewegung des Antriebzahnrads aus der Ausgangsstellung ein möglichst reibungsloses Verstellen des Übertragungselementes zu erreichen, wird das Übertragungselement bei dieser Anfangsbewegung mittels des Führungsabschnitts des Antriebzahnrads geringfügig verstellt, nämlich so dass je nach Drehrichtung der Zahnabschnitt entweder mit seinem ersten oder seinem letzten Zahn in eine Zahnlücke einer Zahnschiene vollständig eingreift und dabei der Zahn aus der gegenüberliegenden Zahnschiene herausgehoben wird. Dabei bewegt sich das Übertragungselement aufgrund des ständigen Eingriffs des Abtriebzahnrads mit der dritten Zahnschiene des Übertragungselements um die Drehachse des Abtriebzahnrads. Bei der nachfolgend beginnenden Drehbewegung des Antriebzahnrads wird dann dessen Führungsabschnitt an der dem Zahneingriff gegenüberliegenden Zahnschiene entlanggeführt, wobei entweder die Zahnschiene oder ein oberhalb und unterhalb der Zahnschiene vorgesehener Bereich des Übertragungselements eine Führungsbahn bildet, an der sich der Führungsabschnitt des Antriebzahnrads abstützen kann. Diese Führung führt zu einer zwangsgeführten Schubbewegung des Übertragungselements.

Die Erfindung wird nachfolgend anhand von Zeichnungen in einem Ausführungsbeispiel wiedergegeben. Die Erfindung ist nicht auf dieses Ausführungsbeispiel beschränkt. Es zeigen:
- Fig. 1a: eine Draufsicht auf die erfindungsgemäße Vorrichtung in der Ausgangsstellung.
- Fig. 1b: eine perspektivische Ansicht der Vorrichtung gemäß Fig. 1a in der Ausgangsstellung,
- Fig. 2a: eine Draufsicht auf die Vorrichtung gemäß Fig. 1a nach einer Rechtsdrehung,
- Fig. 2b: eine perspektivische Ansicht von Fig. 2a,
- Fig. 3a: eine Draufsicht auf die Vorrichtung gemäß Fig. 1a nach einer Linksdrehung,
- Fig. 3b: eine perspektivische Ansicht von Fig. 3a,
- Fig. 4: eine perspektivische Ansicht einer Schwenkgriffanordnung.

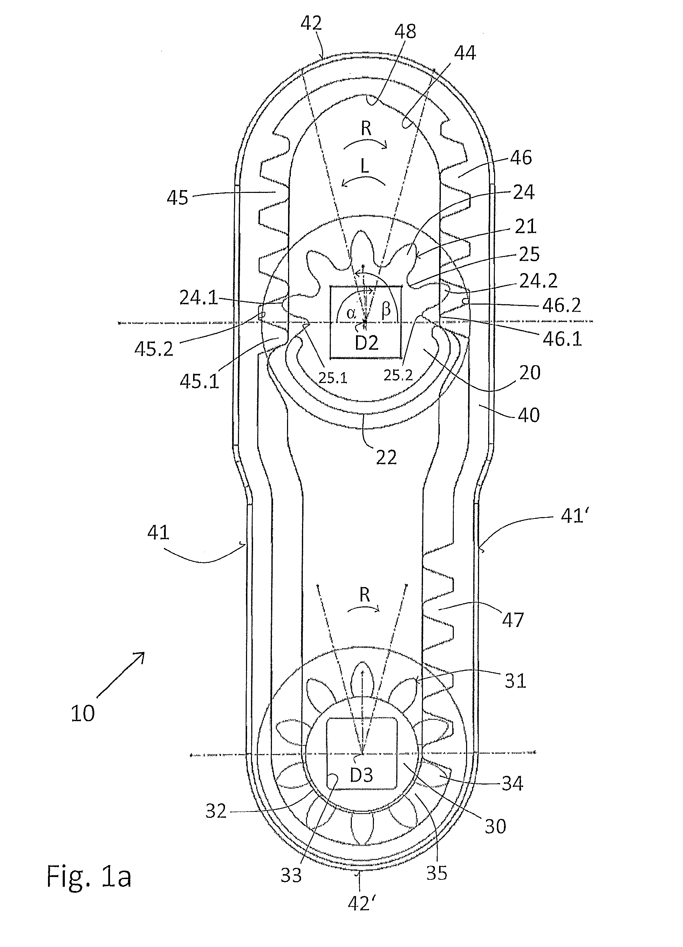

Die erfindungsgemäße Vorrichtung 10 zur Erzeugung einer unidirektionalen Drehbewegung ist in den Fig. 1a bis 3b ohne ein Gehäuse gezeigt, welches die notwendigen Elemente der Vorrichtung 10 aufnimmt, nämlich ein Antriebzahnrad 20, ein Abtriebzahnrad 30 sowie ein Übertragungselement 40. Das Abtriebzahnrad 20 ist in dem nicht gezeigten Gehäuse mit feststehender Drehachse D2 gelagert und das Abtriebzahnrad 30 ist in dem gleichen Gehäuse mit feststehender Drehachse D3 gelagert. Das Übertragungselement 40 ist zwangsgeführt und kann zur Verstellung geringfügig um die Drehachse D3 pendeln.

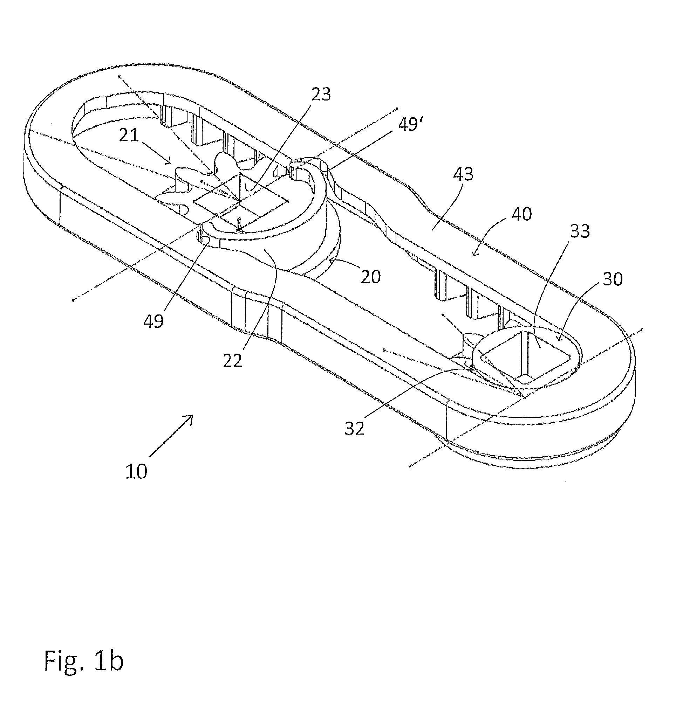

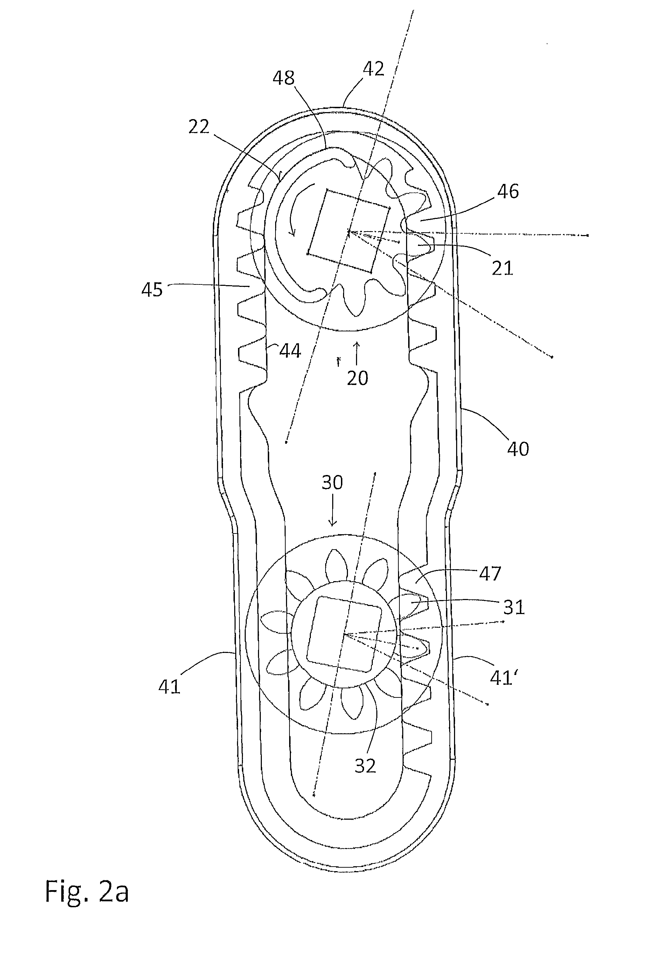

Das Antriebzahnrad 20 und das Abtriebzahnrad 30 besitzen jeweils einen Zahnabschnitt 21, 31 und einen Führungsabschnitt 22, 32. Bei dem Antriebzahnrad 20 ist der Zahnabschnitt 21 und der Führungsabschnitt 22 an gegenüberliegenden Umfangsbereichen des Antriebzahnrads 20 vorgesehen, wobei in diesem Ausführungsbeispiel der Zahnabschnitt 21 mehr als die Hälfte des Umfangs einnimmt. Die Zähne 24 des Zahnabschnittes 21 des Antriebzahnrads 20 können sowohl mit der Zahnreihe einer ersten Zahnschiene 45 als auch der Zahnreihe einer zweiten Zahnschiene 46 in Eingriff gebracht werden. In Fig. 1a und Fig. 1b ist die Ausgangsstellung gezeigt, bei der der erste Zahn 24.1 des Zahnabschnitts 21, wie auch der letzte Zahn 24.2 des Zahnabschnitts 21 mit ihren Zahnspitzen jeweils teilweise in die erste Zahnlücke 45.2 der ersten Zahnschiene 45 wie auch der ersten Zahnlücke 46.2 der zweiten Zahnschiene 46 eintauchen. Wird das Antriebzahnrad 20 aus dieser Ausgangsstellung im Uhrzeigersinn nach rechts verdreht, wie durch den Pfeil R in Fig. 1a angegeben, so gelangt der letzte Zahn 24.2 des Zahnabschnitts 21 des Antriebzahnrads 20 vollständig in die erste Zahnlücke 46.2 der zweiten Zahnschiene 46, wohingegen der erste Zahn 24.1 aus der ersten Zahnlücke 45.2 der ersten Zahnschiene 45 herausgehoben wird. Für diese Verstellung wird das Übertragungselement 40 geringfügig um die Drehachse D3 nach links bewegt. Durch die weitere Drehbewegung des Antriebzahnrads im Uhrzeigersinn, d.h. nach rechts, kämmen dessen Zähne 24 entlang der zweiten Zahnschiene 46. Da das Antriebzahnrad 20 fest am Gehäuse angeordnet ist, bewegt sich das zwangsgeführte Übertragungselement 40 bei dieser Drehbewegung nach unten, bis es die in Fig. 2a gezeigte Position erreicht hat. Die Schubbewegung des Übertragungselements 40 wird durch eine dritte Zahnschiene 47, die ebenfalls Teil des Übertragungselements 40 ist, auf das Abtriebzahnrad 30 übertragen, welches bei der Rechtsdrehung R des Antriebzahnrads 20 ebenfalls eine Rechtsdrehung R entlang der Zahnschiene 47 vorgenommen hat. Hierfür besitzt das Abtriebzahnrad 30 den umfangsseitigen Zahnabschnitt 31.

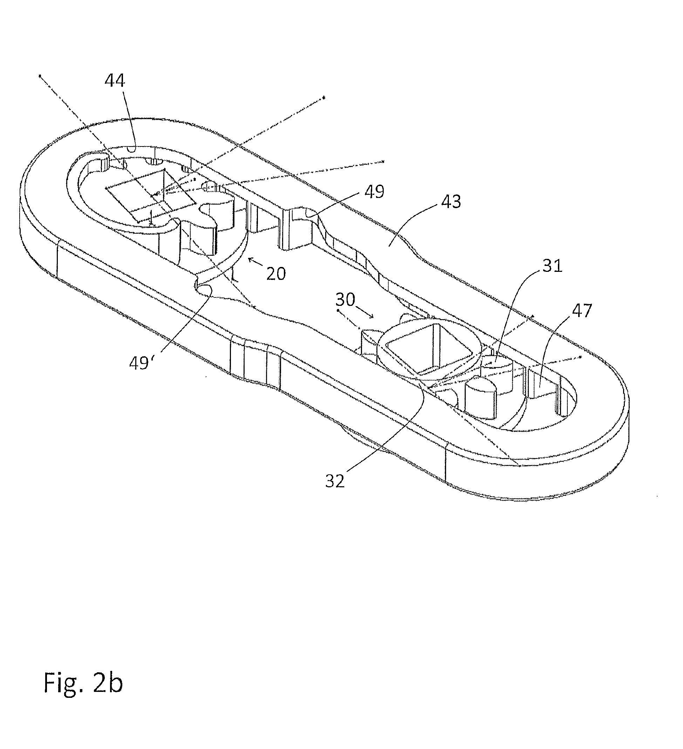

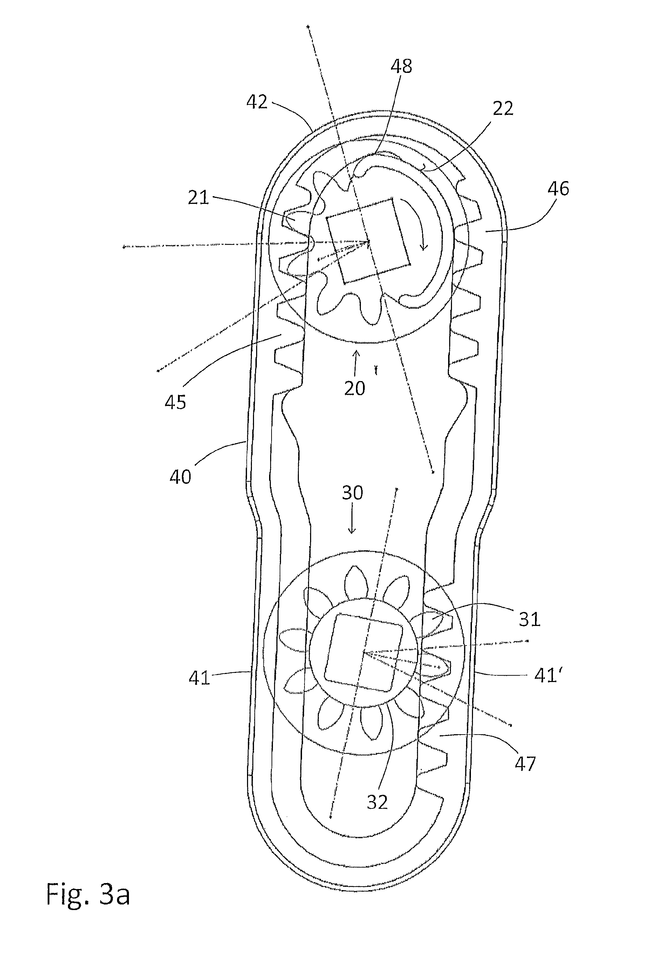

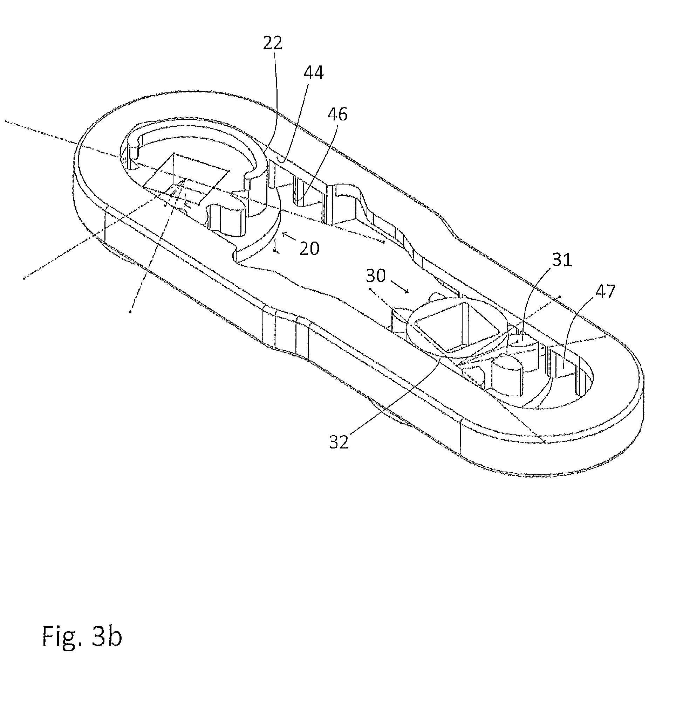

Wird nun andererseits ausgehend von der Ausgangsstellung, siehe Fig. 1a, eine Drehbewegung entgegen dem Uhrzeigersinn, d.h. eine Linksdrehung in Richtung L, des Antriebzahnrads 20 veranlasst, so wird am Anfang dieser Drehbewegung das um die Drehachse D3 bewegbare Übertragungselement 40 durch das Antriebzahnrad 20 geringfügig nach rechts verstellt, damit der erste Zahn 24.1 des Zahnabschnitts 21 des Antriebzahnrads 20 in die erste Zahnlücke 45.2 der ersten Zahnschiene 45 vollständig eintauchen kann und bei nachfolgender Linksdrehung des Antriebzahnrads 20 sich der Zahnabschnitt 21 an der Zahnreihe der ersten Zahnschiene 45 abwälzen kann und zwar bis die in Fig. 3a gezeigte Position erreicht ist. Durch diese Drehbewegung des Antriebzahnrads 20 in Richtung L führt das Übertragungselement 40 eine Schubbewegung aus und das Abtriebzahnrad 30, das mit seinem Zahnabschnitt 31 in Zahneingriff mit der dritten Zahnschiene 47 steht, wird zu einer Drehbewegung veranlasst und auch in diesem Fall zu einer Drehbewegung im Uhrzeigersinn. Der Führungsabschnitt 32 des Abtriebzahnrads 30 stützt sich bei einer Drehbewegung am Übertragungselement 40 ab. Dieser Führungsabschnitt 32 befindet sich in diesem Beispiel, nicht wie beim Antriebzahnrad 20 im Vergleich zum Zahnabschnitt an unterschiedlichen Umfangsbereichen, sondern stellt in diesem Beispiel eine Verlängerung des Zahnfußkreises des Zahnabschnitts 31 dar, wie dies besser aus den Fig. 2b und 3b zu ersehen ist.

Damit führt eine Drehbewegung des Antriebzahnrads 20 im Uhrzeigersinn, d.h. nach rechts bzw. entgegen dem Uhrzeigersinn, d.h. nach links, in jedem Fall zu einer Drehung des Abtriebzahnrads im Uhrzeigersinn, d.h. nach rechts, wie durch die Pfeile in Fig. 1a angedeutet ist.

Bei der Drehbewegung nach rechts führt das Antriebzahnrad 20 eine Drehbewegung um einen Drehwinkel α aus, um die Position in Fig. 2a zu erzielen und bei einer Drehbewegung entgegen dem Uhrzeigersinn führt das Antriebzahn eine Drehbewegung um den Drehwinkel β aus und gelangt in eine Position, gezeigt in Fig. 3a. Die Drehwinkel α und β sind bei diesem Ausführungsbeispiel 105°. Der Drehwinkel kann jedoch auch einen anderen Wert einnehmen, bevorzugt werden Drehwinkel > 90 °.

Um eine Verstellung des um die Drehachse D3 geringfügig pendelnden Übertragungselements 40 zu Beginn der Drehbewegung des Antriebszahnrads 20 möglichst reibungslos und geräuscharm auszuführen, ist bei dieser Ausführungsform eine Anordnung gewählt, siehe Fig. 1a, bei der die erste Zahnschiene 45 und die zweite Zahnschiene 46 mit ihren Zahnreihen gegenüberliegend am Übertragungselement 40 so angeordnet sind, dass der erste Zahn 45.1 der ersten Zahnschiene 45 und der erste Zahn 46.1 der zweiten Zahnschiene 46 jeweils am Führungsabschnitt 22 des Antriebzahnrads 20 anliegen und dabei geringfügig in die jeweils erste Zahnlücke 25.1 bzw. letzte Zahnlücke 25.2 des Zahnabschnitts 21 des Antriebzahnrades 20 eingreifen, jedoch nicht bis in den Fußbereich dieser Zahnlücken 25.1, 25.2. Die Zahnspitzen der ersten Zähne 45.1 und 46.1 der beiden Zahnschienen 45,46 berühren das Antriebzahnrad 20 im Kopfbereich der Evolventenverzahnung des Zahnabschnitts 21, also oberhalb eines Teilkreisdurchmessers der Zähne 24. Der Fig. 1a ist des Weiteren zu entnehmen, dass die Zahnspitzen der Zahnreihen der ersten Zahnschiene 45 versetzt zu den Zahnspitzen der Zahnreihe der zweiten Zahnschiene 46 angeordnet sind. In der Ausgangsstellung des Antriebzahnrads 20 befindet sich der Beginn der ersten Zahnlücke 45.2 der ersten Zahnschiene 45, der Fußbereich der ersten Zahnlücke 25.1 des Zahnabschnitts 31 sowie die Drehachse D2 des Antriebzahnrads 20 mit der Spitze des ersten Zahns 46.1 der zweiten Zahnschiene 46 auf einer Linie. Des Weiteren greifen der erste Zahn 24.1 und der letzte Zahn 24.2 teilweise in die jeweils erste Zahnlücke 45.2. bzw. 46.2 der Zahnschienen 45, 46 ein. Das Übertragungselement 40 kann sowohl nach rechts als auch nach links verstellt werden, es pendelt um die Drehachse D3 des Abtriebzahnrads 30. Diese Anordnung bewirkt, dass bei einer geringfügigen Bewegung nach rechts oder links ein Zahn 24 des Zahnabschnitts 21 in eine der beiden Zahnschienen 45, 46 vollständig eingedrückt und die gegenüberliegende Zahnschiene 46, 45 durch den Führungsabschnitt 22 des Antriebzahnrads 20 vom Antriebzahnrad 20 weggedrückt wird. Bei der nachfolgenden Drehbewegung stützt sich das Antriebzahnrad 20 am Übertragungselement 40 dergestalt ab, dass der Führungsabschnitt 22 an einer Führungsbahn 44 des Übertragungselements 40 abrollt und sich das Übertragungselement 40 zwangsgeführt nach unten verschiebt. Die Führungsbahn 44 ist aus der Fig. 1a und Fig. 1b zu ersehen. Diese Führungsbahn 44 ist an der Oberseite 43 des ringartigen Übertragungselements 40 ausgebildet. Die Innenseiten dieser Oberseite 43 dienen im Bewegungsbereich des Antriebzahnrads 20 die Führungsbahn 44. Für den Führungsabschnitt 22 des Antriebzahnrads 20 in der Ausgangsstellung ist an der Oberseite 43 des Übertragungselements 40 beidseitig jeweils eine Ausbauchung 49 bzw. 49' vorgesehen, die einen ausreichenden Freiraum für diesen Führungsabschnitt 22 schafft. Im Bereich der Schmalseite 42 ist die Führungsbahn 44 verformt und bildet einen Anschlag 48 für den Führungsabschnitt 22, um die Drehbewegung des Antriebzahnrads 20 zu beenden. Die gebogene Schmalseite 42 bzw. die gegenüberliegende Schmalseite 42' verbinden die zwei Langseiten 41, 41' des Übertragungselements 40 zu einem ringförmigen Gebilde. Die Langseiten 41, 41' haben dabei gerade Abschnitte, nämlich sichtbar in Fig. 1a im oberen Bereich sowie im unteren Bereich, einerseits für das Vorsehen der gerade verlaufenden Zahnschienen 45, 46 und andererseits für die gerade verlaufende dritte Zahnschiene 47.

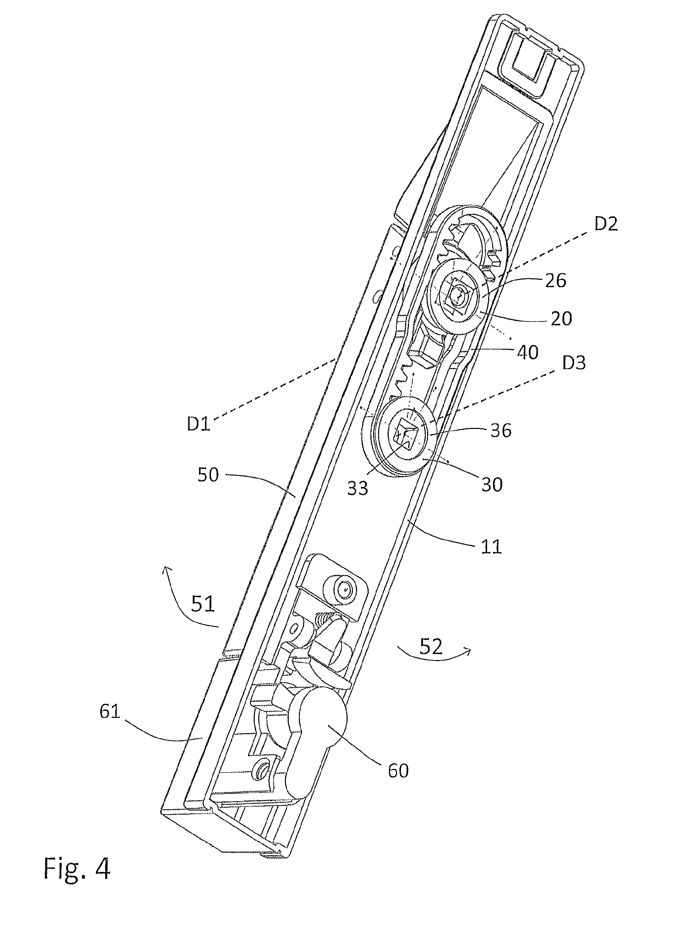

Fig. 4 zeigt eine Schwenkgriffanordnung, die insbesondere zum Verschluss einer Tür eines Schaltschranks eingesetzt werden kann. Die Handhabe 50 ermöglicht in der gezeigten eingeschwenkten Stellung keine Öffnungsbewegung der Tür und macht in einer nach rechts und/oder nach links ausgeschwenkten Stellung eine Öffnungsbewegung der Tür möglich. Die Handhabe 50 besitzt für die Schwenkbewegungen 51, 52 eine Schwenkachse D1, die hier vorzugsweise mit der Drehachse D2 des Antriebzahnrads 20 übereinstimmt. Die Handhabe 50 ist also drehfest mit dem Antriebzahnrad 20 verbunden. Beide Schwenkbewegungen 51, 52 lösen bei dem Antriebzahnrad 20 eine Drehbewegung aus, die über das Übertragungselement 40 auf das Abtriebzahnrad 30 in der vorbeschriebenen Weise übertragen wird, wobei das Abtriebzahnrad 30 in diesem in Fig. 4 gezeigten Fall eine Drehbewegung ausschließlich nach links durchführt und dabei das drehfest mit dem Abtriebzahnrad 30 verbundene nicht gezeigte Drehteil bewegt, welches direkt oder indirekt mit einem Verschlusselement verbunden ist. Für die drehfeste Verbindung zwischen Antriebzahnrad 20 und Handhabe 50 besitzt das Antriebzahnrad 20 eine Ausnehmung 23, in diesem Fall eine Vierkantausnehmung. In gleicher Weise besitzt das Abtriebzahnrad 30 eine Ausnehmung 33 für ein Drehteil. Das Drehteil durchgreift bei Befestigung der Schwenkgriffanordnung an der Tür das Türblatt und ist auf der Rückseite der Tür mit einem Verschlusselement, beispielsweise einer längsbeweglichen Schubstange oder ein Riegelsystem, direkt oder indirekt verbunden. Eine solche Schubstange kann über die gesamte Länge der Tür geführt werden und zur Verriegelung hinter den oberen und/oder den unteren Rand des Schranks greifen. Antriebzahnrad 20, Übertragungselement 40 und Abtriebzahnrad 30 sind bei der Schwenkgriffanordnung in dem gemeinsamen Gehäuse 11 untergebracht. Das Antriebzahnrad 20 besitzt einen Aufsatz 26 und das Abtriebzahnrad 30 einen Aufsatz 36. Diese Aufsätze 26, 36 besitzen einen so großen Außendurchmesser, dass sie das um die Drehachse D3 pendelnde sowie bei der Übertragung der Bewegung geführte Übertragungselement 40 im Gehäuse 11 halten. Das Übertragungselement 40 kann nur bestimmte Bewegungen ausführen, nämlich in der Ausgangsstellung, d.h. vor einer Schwenkbewegung 51, 52 der Handhabe 50, kann es nur geringfügig um die Drehachse D3 verstellt werden. Durch eine Schwenkbewegungen 51, 52 der Handhabe 50 wird das Übertragungselement 40 aus der in Fig. 4 gezeigten Stellung nach unten bewegt. In jeder Stellung ist das Übertragungselement 40 zwangsgeführt.

Unterhalb der Handhabe 50 befindet sich bei der Schwenkgriffanordnung zusätzlich eine Verriegelungseinrichtung 60 für die Handhabe. Diese Verriegelung kann auch einen Schließzylinder beinhalten, so dass über einen passenden Schlüssel die Verriegelung gelöst werden kann. Der Schließzylinder ist durch eine bewegbare Abdeckkappe 61 geschützt.

Eine solche in Fig. 4 gezeigte Schwenkgriffanordnung wird an der Tür eines Schranks, insbesondere eine Schaltschranks, befestigt. Aus dem Gehäuse 11 der Schwenkgriffanordnung ragen das Drehteil und der Riegel für die Verriegelung 60 der Handhabe 50 heraus, die entsprechende Ausnehmungen in der Tür durchgreifen. Das nicht gezeigte Drehteil ist auf der Rückseite der Tür mit dem entsprechenden Verschlusselement verbunden.

In vorteilhafter Weise führt sowohl eine Schwenkbewegung 51 in die eine Richtung, wie auch eine Schwenkbewegung 52 in die andere Richtung zu ein und dergleichen Bewegung des mit dem Abtriebzahnrad 20 verbundenen Drehteils. In vorteilhafter Weise kann eine solche Schwenkgriffanordnung damit für unterschiedlich angeschlagene Türen verwendet werden.

### Bezugszeichenliste

- 10: Vorrichtung
- 11: Gehäuse
- 20: Antriebzahnrad
- 21: Zahnabschnitt
- 22: Führungsabschnitt
- 23: Ausnehmung
- 24: Zahn
- 24.1: erster Zahn
- 24.2: letzter Zahn
- 25: Zahnlücke
- 25.1: erste Zahnlücke
- 25.2: letzte Zahnlücke
- 26: Aufsatz
- 30: Abtriebzahnrad
- 31: Zahnabschnitt
- 32: Führungsabschnitt
- 33: Ausnehmung
- 34: Zahn
- 35: Zahnlücke
- 36: Aufsatz
- 40: Übertragungselement
- 41, 41': Langseite
- 42, 42': Schmalseite
- 43: Oberseite
- 44: Führungsbahn
- 45: erste Zahnschiene
- 45.1: erster Zahn
- 45.2: erste Zahnlücke
- 46: zweite Zahnschiene
- 46.1: erster Zahn
- 46.2: erste Zahnlücke
- 47: dritte Zahnschiene
- 48: Anschlag
- 49, 49': Aussparung
- 50: Handhabe
- 51: Schwenkbewegung von 50 nach rechts
- 52: Schwenkbewegung von 50 nach links
- 60: Verriegelungseinrichtung
- 61: Abdeckkappe

- D1: Schwenkachse von 50
- D2: Drehachse von 20
- D3: Drehachse von 30

- L: Schwenkbewegung entgegen dem Uhrzeigersinn von 50
- R: Schwenkbewegung im Uhrzeigersinn von 50

## Patentansprüche

1. Vorrichtung zur Erzeugung einer unidirektionalen Drehbewegung,
- mit einem Gehäuse (11), in welchem ein Antriebzahnrad (20) und ein Abtriebzahnrad (30) mit feststehender Drehachse (D2, D3) gelagert sind sowie ein Übertragungselement (40) bewegbar aufgenommen ist,
- wobei das Antriebzahnrad (20) und das Abtriebzahnrad (30) einen Zahnabschnitt (21, 31) und einen Führungsabschnitt (22, 32) besitzen,
- wobei das Übertragungselement (40) drei fest miteinander verbundene Zahnschienen (45, 46, 47) besitzt,
- wobei das Antriebzahnrad (20) in seiner Ausgangsstellung mit zumindest einem Zahn (24) seines Zahnabschnitts (21) in teilweisen Zahneingriff mit einer von zwei geraden Zahnschienen (45, 46) des verstellbaren Übertragungselements (40) ist,
- wobei das Antriebzahnrad (20) aus seiner Ausgangsstellung sowohl durch eine Drehbewegung im Uhrzeigersinn (Rechtdrehung) als auch durch eine Drehbewegung entgegen dem Uhrzeigersinn (Linksdrehung) um einen Drehwinkel (α, β) bewegbar ausgestaltet ist,
- wobei das Antriebzahnrad (20) bei einer Rechtdrehung (R) bzw. bei einer Linksdrehung (L) mit seinem Zahnabschnitt (21) in vollständigen Zahneingriff mit einer von zwei geraden Zahnschienen (45, 46) des Übertragungselements (40) ist, die beide parallel verlaufen und deren Zahnreihen einander zugewandt sind und wobei das Antriebzahnrad (20) dabei mit seinem Führungsabschnitt (22) am Übertragungselement (40) abgestützt wird,
- wobei das Abtriebzahnrad (30) mit seinem Zahnabschnitt (31) in Zahneingriff mit einer Zahnreihe einer dritten geraden Zahnschiene (47) des Übertragungselements (40) ist,
wobei eine Drehbewegung (R, L) des Antriebsrades (20) um seine Drehachse (D2) mittels des zwangsgeführten Übertragungselements (40) zu einer unidirektionale Drehbewegung des Abtriebzahnrads (30) um die Drehachse (D3) führt.

2. Vorrichtung nach Anspruch 1, **dadurch gekennzeichnet, dass** die dritte Zahnschiene (47) parallel zu den beiden weiteren Zahnschienen (45, 46) verläuft und das Übertragungselement (40) in der Ausgangsstellung des Antriebzahnrads (20) um die Drehachse (D3) des Abtriebzahnrads (30) pendeln kann.

3. Vorrichtung nach Anspruch 1 oder 2, **dadurch gekennzeichnet, dass** das Übertragungselement (40) ringartig ausgestaltet ist, wobei der das Übertragungselement (40) bildende geschlossene Ring zwei gegenüberliegende Langseiten (41, 41') mit gerade verlaufenden Abschnitten besitzt, wobei sich die Zahnschienen (45, 46, 47) an der Innenseite des Ringes im Bereich dieser geraden Abschnitte befinden und wobei die Langseiten (41, 41') jeweils über gebogene Schmalseiten (42, 42') miteinander verbunden sind.

4. Vorrichtung nach einem der Ansprüche 1 bis 3, **dadurch gekennzeichnet, dass** der Führungsabschnitt (22) des Antriebzahnrades (20) bei einem Zahneingriff des Zahnabschnitt (21) des Antriebzahnrads (20) in eine der beiden Zahnschienen (45, 46) des Übertragungselements (40) sich an der gegenüberliegenden Zahnschiene (46, 45) oder gegenüberliegend an einer Führungsbahn (44) des Übertragungselements (40) abstützt.

5. Vorrichtung nach Anspruch 4, **dadurch gekennzeichnet, dass** die Führungsbahn (44) der Zwangsführung des Übertragungselements (40) dient und durch die Oberseite (43) des Übertragungselements (40) gebildet wird, wobei die Führungsbahn (44) im Bereich der Schmalseite (42) des Übertragungselements (40) einen Anschlag (48) zur Begrenzung der Drehbewegungen (R, L) des Antriebzahnrads (20) bildet.

6. Vorrichtung nach Anspruch 4 oder 5, **dadurch gekennzeichnet, dass** die Führungsbahn (44) für das Antriebrad (20) in jeweils einer Aussparung (49, 49') endet, wobei diese Aussparungen (49, 49') an der Oberseite (43) des Übertragungselementes (40) zur Umstellung von einer Rechtsbewegung (R) in eine Linkbewegung (L) sowie umgekehrt einen ausreichend großen Freiraum für den Führungsabschnitt (22) des Antriebrads (20) bilden.

7. Vorrichtung nach einem der Ansprüche 1 bis 6, **dadurch gekennzeichnet, dass** der Zahnabschnitt (21) und der Führungsabschnitt (22) des Antriebzahnrads (20) an gegenüberliegenden Umfangsbereichen des Antriebzahnrads (20) vorgesehen sind.

8. Vorrichtung nach einem der Ansprüche 1 bis 7, **dadurch gekennzeichnet, dass** der Zahnabschnitt (31) und der Führungsabschnitt (32) des Abtriebzahnrads (30) übereinander am Abtriebzahnrad (30) vorgesehen sind, vorzugsweise stellt der Führungsabschnitt (32) des Abtriebzahnrads (30), welcher sich am Übertragungselement (40) abstützt, eine Verlängerung des Zahnfußkreises des Zahnabschnitts (31) dar.

9. Vorrichtung nach einem der Ansprüche 1 bis 8, **dadurch gekennzeichnet, dass** für die Verzahnung des Antriebrad (20) eine Evolventenverzahnung gewählt wird.

10. Vorrichtung nach Anspruch 9, **dadurch gekennzeichnet, dass** das Antriebzahnrad (20) in seiner Ausgangsstellung mit der Zahnspitze des ersten Zahns (24.1) des Zahnabschnitts (21) in die erste Zahnlücke (45.2) der ersten Zahnschiene (45) und ebenso mit der Zahnspitze des letzten Zahns (24.2) des Zahnabschnitts (21) in die erste Zahnlücke (46.2) der gegenüberliegenden, zweiten Zahnschiene (46) eingreift, wobei vorzugsweise der Beginn der ersten Zahnlücke (45.2) der ersten Zahnschiene (45) und der Fußbereich der vor dem ersten Zahn (24.1) vorgesehenen ersten Zahnlücke (25.1) sowie die Spitze des ersten Zahns (46.1) der zweiten Zahnschiene (46) auf einer Linie liegen und die Zähne der ersten und der zweiten Zahnschiene (45, 46) versetzt zueinander angeordnet sind.

11. Schwenkgriffanordnung, insbesondere zum Verschluss einer Tür eines Schaltschranks,
- mit einem Gehäuse (11), das an der Tür befestigbar ist,
- mit einer schwenkbaren Handhabe (50), die im montiertem Zustand in einer eingeschwenkten Stellung eine Öffnungsbewegung der Tür nicht ermöglicht und in einer nach rechts und/oder nach links verschwenkten Stellung eine Öffnungsbewegung der Tür ermöglicht, wobei die Schwenkbewegungen (51, 52) um die Schwenkachse (D1) der Handhabe (50) mittels einer Vorrichtung gemäß einem der Ansprüche 1 bis 10 auf ein Verschlusselement übertragbar ist,**dadurch gekennzeichnet,**
- **dass** die Handhabe (20) drehmomentübertragend mit dem Antriebzahnrad (20) verbunden ist und durch seine Schwenkbewegung (51, 52) um die Schwenkachse (D1) beim Antriebzahnrad (20) eine Rechtdrehung (R) bzw. eine Linksdrehung (L) bewirkt,
- **dass** das Abtriebzahnrad (30) drehmomentübertragend mit einem im montierten Zustand das Türblatt durchgreifenden Drehteil verbunden ist,
- **dass** durch die Drehbewegung (R, L) des Antriebsrades (20) um seine Drehachse (D2) mittels des zwangsgeführten Übertragungselements (40) eine unidirektionale Drehbewegung des Abtriebzahnrads (30) und des Drehteils um die Drehachse (D3) erzeugt werden kann,
wobei das Drehteil direkt oder indirekt auf das Verschlusselement wirkt.

12. Schwenkgriffanordnung nach Anspruch 11, **dadurch gekennzeichnet, dass** je ein Aufsatz (26, 27) drehmomentübertragend mit dem Antriebzahnrad (20) und dem Abtriebzahnrad (30) verbunden ist und diese Aufsätze (26, 36) das Übertragungselement (40) am Gehäuse (11) halten.

13. Schwenkgriffanordnung nach Anspruch 11 oder 12, **dadurch gekennzeichnet, dass** das Verschlusselement eine durch das Drehteil längsbewegliche Schubstange oder ein Riegelsystem darstellt.

14. Schwenkgriffanordnung nach einem der Ansprüche 11 bis 13, **dadurch gekennzeichnet, dass** eine Verriegelungseinrichtung (60) zum Sichern der Handhabe (50) in der eingeschwenkten Stellung vorgesehen ist, welche im Gehäuse (11) angeordnet und über ein Schließsystem entriegelbar oder verriegelbar ist, wobei das Schließsystem vorzugsweise durch eine am Gehäuse (11) bewegbar angeordnete Abdeckkappe (61) zugänglich wird.

## Claims

1. A device for generating a unidirectional rotational movement
- with a housing (11), in which a drive gear (20) and output gear (30) with fixed rotating axis (D2, D3) is mounted, as well as a movable transmission element (40) is installed,
- whereby, the drive gear (20) and output gear (30) have a tooth section (21, 31) a guide section (22, 32).
- whereby, the transmission element (40) has three fixed toothed rails (45, 46, 47) connected to one another,
- whereby, at its original position, the drive gear (20) is partly engaged by one tooth (24) of its tooth section (21) with one of the two straight toothed rails (45, 46) of the adjustable transmission element (40),
- whereby, the drive gear (20) has an arrangement where it can move through an angle (α, β) from its original position by rotational movement in a clockwise direction (rotating to the right) as well as by rotational movement in an anticlockwise direction (rotating to the left),
- whereby, by rotational movement to the right (R) or rotational movement to the left (L), the toothed section (21) of the drive gear (20) completely engages with one of the two straight toothed rails (45, 46) of the transmission element (40), of which both run parallel and their rows of teeth face each other and, whereby, the drive gear (20) is thereby supported by its guide section (22) on the transmission element (40),
- whereby, the output gear (30) engages with its toothed section (31) in the toothed mesh of one row of teeth of a third toothed rail (47) of the transmission element (40),
- whereby, rotational movement (R, L) of the drive gear (20) around its rotational axis (D2) through the force guide of the transmission element (40) results in unidirectional rotational movement of the output gear (30) around the rotational axis (D3).

2. A device in accordance with claim 1, **characterized in that** the third toothed rail (47) runs parallel to the other two toothed rails (45, 46) and the transmission element (40) can oscillate around the rotational axis (D3) of the output gear (30) when the drive gear (20) is at its original position.

3. A device in accordance with claim 1 or 2, **characterized in that** the transmission element (40) is designed as a ring, whereby, the closed ring formed by the transmission element (40) has two opposing long sides (41, 41') with sections running straight, whereby, the toothed rails (45, 46, 47) are located on the inside of the ring, in the area of these straight sections and, whereby, the long sides (41, 41') are each connected to each other by curved narrow sides (42, 42').

4. A device in accordance with of the claims 1 to 3, **characterized in that** the guide section (22) of the drive gear (20) when the toothed section (21) of the drive gear (20) meshes in one of the two toothed rails (45, 46) of the transmission element (40) is supported on the opposite toothed rails (46, 45) or opposite on a guide track (44) of the transmission element (40).

5. A device in accordance with claim 4, **characterized in that** the guide track (44) is used as the force guide of the transmission element (40) and is formed by the top (43) of the transmission element (40), whereby, the guide track (44) in the area of the narrow side (42) of the transmission element (40) forms a stop (48) to limit the rotational movement (R, L) of the drive gear (20).

6. A device in accordance with claim 4 or 5, **characterized in that** the guide track (44) for the drive gear (20) ends in a recess (49, 49'), whereby, the recesses (49, 49') form a sufficiently large space on the top (43) of the transmission element (40) for the guide section (22) of the drive gear (20), in order to change from movement to the right (R) to movement to the left (L) and vice versa.

7. A device in accordance with of the claims 1 to 6, **characterized in that** the toothed section (21) and guide section (22) of the drive gear (20) are provided on opposite circumferential areas of the drive gear (20).

8. A device in accordance with one of the claims 1 to 7, **characterized in that** the toothed section (31) and guide section (32) of the output gear (30) are provided above one another on the output gear (30), preferably that the guide section (32) of the output gear (30), that is supported on the transmission element (40), presents an extension of the tooth root circle of the toothed section (31).

9. A device in accordance with one of the claims 1 to 8, **characterized in that** evolution gear teeth are selected for the gear teeth of the drive gear (20).

10. A device in accordance with claim 9, **characterized in that**, in its original position, the drive gear (20) engages with the crest of the tooth of the first tooth (24.1) of the toothed section (21) in the first space (45.2) of the tooth of the first toothed rail (45) and also with the crest of the last tooth (24.2) of the toothed section (21) in the space of the tooth (46.2) of the opposing, second toothed rail (46), whereby, preferentially the start of the first space of the first tooth (45.2) of the first toothed rail (45) and the root area of the first space (25.1) provided in front of the first tooth (24.1), as well as the tip of the first tooth (46.1) of the second toothed rail (46) are in a straight line and the teeth of the first and second toothed rail (45, 46) are arranged offset to one another.

11. The arrangement of the swivelling handle, in particular to the lock of a door of a switch cabinet,
- is attached to a housing (11) that can be attached to the door,
- with a swivelling handle (50), in its installed and swivelled in position, that does not enable the door to be opened and enables the door to be opened when in a position swivelled to the right and/or left and the swiveling movement (51, 52) around the rotary axis (D1) of the handle (50) can be transmitted to a locking element using a device in accordance with one of the claims 1 to 10, **characterized in that**,
- the handle (20) is connected to the drive gear (20) by torque transmission and, through its swiveling motion (51, 52), effectuates rotation of the drive gear (20) around the rotary axis (D1) to the right (R) or to the left (L),
- that the output gear (30) is connected by torque transmission with the complete rotary part of the door panel installed
- that by rotational movement (R, L) of the drive gear (20).around its rotary axis (D2), using the force-guided transmission element (40), can generate unidirectional rotational movement of the output gear (30) and the rotary part around the rotary axis (D3), whereby, the rotary part has an effect on the locking element, directly or indirectly.

12. The arrangement of the swivelling handle in accordance with claim 11, **characterized in that** one attachment (26, 27) is attached to the drive gear (20) and the output gear (30) by torque transmission and these attachments (26, 36) hold the transmission element (40) on the housing (11).

13. The arrangement of the swivelling handle in accordance with claim 11 or 12, **characterized in that** the locking element is presented by a push rod moved longitudinally by the rotary part, or a locking system.

14. The arrangement of the swivelling handle in accordance with claim 11 to 13, **characterized in that** the locking device (60) is provided to secure the handle (50) in the swiveled in position, is arranged in the housing (11) and can be unlocked or locked by a closing system, whereby, the closing system is preferably accessed by a movable cover cap (61) arranged on the housing (11).

## Revendications

1. Dispositif pour générer un mouvement rotatif unidirectionnel
- comprenant un boîtier (11) dans lequel sont en appui un pignon d'entraînement (20) et un pignon de prise de force (30) à axes de rotation fixes (D2, D3), et dans lequel est logé, de manière déplaçable, un élément de transmission (40),
- sachant que le pignon d'entraînement (20) et le pignon de prise de force (30) possèdent un segment denté (21, 31) et un segment de guidage (22, 32),
- sachant que l'élément de transmission (40) possède trois crémaillères (45, 46, 47) fermement reliées entre elles,
- sachant que le pignon d'entraînement (20), depuis sa position de départ, engrène en partie par au moins une dent (24) de son segment denté (21) dans l'une des deux crémaillères rectilignes (45, 46) de l'élément de transmission (40) ajustable,
- sachant que le pignon d'entraînement (20) est configuré pour pouvoir se déplacer, depuis sa position de départ, selon un angle de rotation (α, β) aussi bien par un mouvement dans le sens horaire (rotation vers la droite) que par un mouvement dans le sens antihoraire (rotation vers la gauche),
- sachant que le pignon d'entraînement (20), lors d'une rotation à droite (R) et/ou d'une rotation à gauche (L) engrène entièrement par son segment denté (21) dans l'une des deux crémaillères rectilignes (45, 46) de l'élément de transmission (40), crémaillères au tracé parallèle et dont les rangées de dents se regardent, et sachant que le pignon d'entraînement (20) prend ce faisant appui par son segment de guidage (22) contre l'élément de transmission (40),
- sachant que par son segment denté (31) le pignon de prise de force (30) engrène dans une rangée de dents d'une troisième crémaillère rectiligne (47) de l'élément de transmission (40),
- sachant qu'un mouvement rotatif (R, L) du pignon d'entraînement (20) autour de son axe (D2) au moyen de l'élément de transmission (40) guidé de force conduit le pignon de prise de force (30) à exécuter un mouvement rotatif unidirectionnel autour de l'axe de rotation (D3).

2. Dispositif selon la revendication 1, **caractérisé en ce que** la troisième crémaillère (47) présente un tracé parallèle aux deux autres crémaillères (45, 46) et que l'élément de transmission (40) peut, lorsque le pignon d'entraînement (20) se trouve en position de départ, pivoter autour de l'axe de rotation (D3) du pignon de prise de force (30).

3. Dispositif selon la revendication 1 ou 2, **caractérisé en ce que** l'élément de transmission (40) est configuré annulaire, sachant que l'anneau fermé formant l'élément de transmission (40) possède deux côtés longitudinaux (41, 41') se faisant face avec segments rectilignes, sachant que les crémaillères (45, 46, 47) situées sur le côté intérieur de l'anneau se trouvent dans la zone de ces segments rectilignes et sachant que les côtés longitudinaux (41, 41') sont reliés entre eux chacun via des côtés étroits incurvés (42, 42').

4. Dispositif selon l'une des revendications 1 à 3, **caractérisé en ce que** le segment de guidage (22) du pignon d'entraînement (20), lorsque le segment denté (21) du pignon d'entraînement (20) engrène dans l'une des deux crémaillères (45, 46) de l'élément de transmission (40), prend appui contre la crémaillère (46, 45) située en face, ou prend appui en face contre une piste de guidage (44) de l'élément de transmission (40).

5. Dispositif selon la revendication 4, **caractérisé en ce que** la piste de guidage (44) sert au guidage forcé de l'élément de transmission (40) et qu'elle est formée par le côté supérieur (43) de l'élément de transmission (40), sachant que la piste de guidage (44) forme, dans la zone du côté étroit (42) de l'élément de transmission (40), une butée (48) servant à limiter les mouvements rotatifs (R, L) du pignon d'entraînement (20).

6. Dispositif selon la revendication 4 ou 5, **caractérisé en ce que** la piste de guidage (44) du pignon d'entraînement (20) se termine chaque fois dans un évidement (49, 49'), sachant que ces évidements (49, 49') se trouvent sur le côté supérieur (43) de l'élément de transmission (40) pour commuter d'un mouvement à droite (R) vers un mouvement à gauche (L), et qu'inversement ils forment un espace suffisamment grand pour le segment de guidage (22) du pignon d'entraînement (20).

7. Dispositif selon l'une des revendications 1 à 6, **caractérisé en ce que** le segment denté (21) et le segment de guidage (22) du pignon d'entraînement (20) sont prévus dans des zones se faisant face sur la circonférence du pignon d'entraînement (20).

8. Dispositif selon l'une des revendications 1 à 7, **caractérisé en ce que** le segment denté (31) et le segment de guidage (32) du pignon de prise de force (30) sont prévus superposés contre le pignon de prise de force (30), **en ce que** le segment de guidage (32) du pignon de prise de force (30) qui prend appui contre l'élément de transmission (40) constitue une prolongation du cercle de pied de dent du segment denté (31).

9. Dispositif selon l'une des revendications 1 à 8, **caractérisé en ce que** pour la denture du pignon d'entraînement (20) est choisie une denture à développante.

10. Dispositif selon la revendication 9, **caractérisé en ce que** le pignon d'entraînement (20) en position de départ engrène par la pointe de la première dent (24.1) du segment denté (21) dans le premier entredent (45.2) de la première crémaillère (45) et, de même, par la pointe de la dernière dent (24.2) du segment denté (21) dans le premier entredent (46.2) de la deuxième crémaillère (46) située en face, sachant que de préférence le début du premier entredent (45.2) de la première crémaillère (45) et la zone du pied du premier entredent (25.1) prévu avant la première dent (24.1), ainsi que la pointe de la première dent (46.1) de la deuxième crémaillère (46) se trouvent sur une ligne et que les dents de la première et de la deuxième crémaillères (45, 46) sont agencées réciproquement décalées.

11. Agencement de poignée pivotante, en particulier pour fermer une porte d'armoire électrique,
- comprenant un boîtier (11) qu'il est possible de fixer contre la porte,
- avec une manette pivotante (50) qui à l'état monté ne permet pas, lorsque pivotée en position, un mouvement d'ouverture et de la porte et qui, lorsque pivotée vers la droite et/ou la gauche, permet un mouvement d'ouverture de la porte, sachant que les mouvements pivotants (51, 52) autour de l'axe de pivotement (D1) de la manette (50) sont transmissibles au moyen d'un dispositif selon l'une des revendications 1 à 10, à un élément de fermeture, **caractérisée en ce que**
- la manette (20) est reliée au pignon d'entraînement (20) pour lui communiquer le couple, et, en raison de son mouvement pivotant (51, 52) autour de l'axe de pivotement (D1), provoque une rotation à droite (R) et/ou une rotation à gauche (L) du pignon d'entraînement (20),
- le pignon de prise de force (30) est relié, pour la transmission du couple, avec une pièce rotative qui à l'état monté traverse le panneau de porte,
- en raison du mouvement rotatif (R, L) du pignon d'entraînement (20) autour de son axe de rotation (D2) au moyen de l'élément de transmission (40) guidé de force, il est possible d'imprimer un mouvement rotatif unidirectionnel au pignon de prise de force (30) et à la pièce de rotation autour de l'axe rotatif (D3), sachant que la pièce rotative agit directement ou indirectement sur l'élément de fermeture.

12. Agencement de poignée pivotante selon la revendication 11, **caractérisé en ce qu'**un élément (26, 27) est, pour transmettre le couple, relié respectivement avec le pignon d'entraînement (20) et le pignon de prise de force (30) et que ces éléments (26, 36) retiennent l'élément de transmission (40) contre le boîtier (11).

13. Agencement de poignée pivotante selon la revendication 11 ou 12, **caractérisé en ce que** l'élément de fermeture est constitué par une biellette déplaçable longitudinalement par la pièce rotative, ou un système à verrou.

14. Agencement de poignée pivotante selon l'une des revendications 11 à 13, **caractérisé en ce qu'**est prévu un dispositif de verrouillage (60) pour sécuriser la manette (50) pivotée en position, dispositif qui est agencé dans le boîtier (11) et qu'il est possible de déverrouiller ou verrouiller via un système d'ouverture/fermeture, sachant que ledit système d'ouverture/fermeture est accessible de préférence à travers un couvercle (61) agencé déplaçable contre le boîtier (11).
